# EUROPÄISCHE PATENTSCHRIFT

(11) **EP 2 228 121 B1**
(45) Veröffentlichungstag und Bekanntmachung des Hinweises auf die Patenterteilung: **09.01.2013**
(21) Anmeldenummer: 10002437.1
(22) Anmeldetag: 09.03.2010
(51) Int. Cl.: B01D 53/22, F03G 7/00, G01N 1/40, G01N 7/10

(54) **Vorrichtung zur Gasanreicherung oder Erzeugung mechanischer Leistung sowie Verfahren dafür**
Device for enriching gas or generating mechanical power and method for same
Dispositif d'enrichissement du gaz ou de génération d'une puissance mécanique, ainsi que procédé correspondant

(30) Priorität: 13.03.2009 DE 102009013138
(43) Veröffentlichungstag der Anmeldung: 15.09.2010
(73) Patentinhaber: Universität Bremen, 28359 Bremen (DE)
(72) Erfinder: Baune, Michael, 28215 Bremen (DE); Thöming, Jörg, 28355 Bremen (DE); Okoth, George, 28215 Bremen (DE); Varesi, Andreas, 80469 München (DE)
(74) Vertreter: Scholz, Volker

(56) Entgegenhaltungen:
- DE-B3-102005 055 675
- US-A- 5 316 568
- HAZRI A ET AL: "A new computational technique for the analysis of diffusion permoporometric data for asymmetric membranes" JOURNAL OF MEMBRANE SCIENCE, ELSEVIER SCIENTIFIC PUBL.COMPANY. AMSTERDAM, NL LNKD- DOI:10.1016/0376-7388(94)00276-5, Bd. 101, Nr. 1-2, 15. Mai 1995 (1995-05-15), Seiten 61-66, XP004740019 ISSN: 0376-7388
- JUSTICE B H ET AL: "A NOVEL BORON SPIN-ON DOPANT" SOLID STATE TECHNOLOGY, PENNWELL CORPORATION, TULSA, OK, US, Bd. 27, Nr. 10, 1. Oktober 1984 (1984-10-01), Seiten 153-159, XP000812331 ISSN: 0038-111X

## Beschreibung

Die vorliegende Erfindung betrifft eine Vorrichtung, die insbesondere zur Gasanreicherung oder zur Erzeugung mechanischer Leistung mittels eines Gases geeignet ist, nach dem Oberbegriff von Anspruch, sowie entsprechende Verfahren.

Eine solche gattungsgemäße Vorrichtung ist aus der DE 10 2005 055 675 B3 bekannt. Die dort beschriebene Vorrichtung umfasst beispielsweise zwei Behälter, die über eine Kapillareinrichtung miteinander verbunden sind. Die Kapillareinrichtung umfasst eine oder mehrere Kapillaren, wobei jede der einen oder mehreren Kapillaren sich von einer Seite zur anderen Seite der Kapillareinrichtung zumindest abschnittsweise verjüngt.

Die Permeation von Gasen in Poren kann durch die drei seit Jahrzehnten bekannten Mechanismen der Gaspermeation, nämlich Größenausschluß, Lösungsdiffusion und Knudsendiffusion, beschrieben werden. Die ersten zwei werden unter anderem in der Membrantrennung genutzt. Bei der Trennung durch Größenausschluß werden Molsiebe mit einer Porenweite deutlich unter 1 Nanometer eingesetzt. Die mitunter sehr spezifische Trennung führt zu sehr hohen Selektivitäten bei gleichzeitig geringer Permeabilität. Bei der Lösungsdiffusion löst sich das Gas in einem Polymergewebe auf und diffundiert. Je nach Polymer kann hier ein großer Bereich an Selektivitäten und Permeabilitäten abgedeckt werden, wobei eine Verbesserung der einen Größe immer zu Lasten der anderen geht.

Werden die Behälter im Stand der Technik mit einem Gas oder einem Gasgemisch gefüllt, so zeigen die Gase an der Kapillareinrichtung unterschiedliches Verhalten und durchlaufen die Kapillare insbesondere unterschiedlich schnell. Dies kann zum einen in der Anreicherung einer Gaskomponente eines Gasgemisches in einem der Behälter resultieren, zum anderen in einer Druckdifferenz zwischen den beiden Behältern, die zur Erzeugung einer mechanischen Leistung eingesetzt werden kann. Bezüglich der genauere Funktionsweise der Vorrichtung aus dem Stand der Technik wird auf die DE 10 2005 055 675 B3 verwiesen.

Wesentlich für die in der DE 10 2005 055 675 B3 beschriebene Vorrichtung ist, dass der minimale Querschnitt von jeder der einen oder mehreren Kapillaren mindestens in einer Richtung kleiner ist als die vorbestimmte mittlere freie Weglänge des Gases. Die Geometrie der Poren und die Unterschiede in den mittleren freien Weglängen der Gase eines Gasgemisches sollen dabei ausreichen, um einen gewünschten Effekt zu erzielen.

Aus der US 5,316,568 ist eine Membran mit einer Vielzahl an Öffnungen bekannt, welche eine Größe und Form aufweisen, um die statistische Bewegung von Gasmolekülen auszunutzen, um einen Gasfluß durch die Membran vorherrschend in eine Richtung zu erzeugen. Eine solche Membran kann in Gasseparationssystemen und Energieerzeugungssystemen verwendet werden, die einen Fluidfluß ausnutzen.

A. Hazri et al., Journal of Membrane Science 101 (1995) 61-66 offenbaren eine modifizierte Technik für die Analyse von permoporometrischen Diffusionsdaten, die durch asymmetrische Membranen erhalten werden. Die Modifikationen ermöglichen eine bessere Abschätzung der Porengrößen und Porengrößenverteilungen.

Es wurde jedoch nun ferner festgestellt, dass zum Betrieb der Vorrichtung aus dem Stand der Technik zum einen keine Triebkraft vorhanden ist, die ein mit der Vorrichtung durchzuführendes Verfahren antreibt. Zum anderen wurde festgestellt, dass die mit der Vorrichtung aus dem Stand der Technik erreichbare Gasanreicherung bzw. Erzeugung mechanischer Leistung noch unzureichend ist. Ferner hat sich bei Einsatz der im Stand der Technik beschriebenen Vorrichtung gezeigt, dass die dort beschriebene Geometrie der Kapillareinrichtung nicht zu einer ausreichenden Trennung eines Gasgemisches führt.

Es ist somit eine Aufgabe der vorliegenden Erfindung, eine Vorrichtung bereitzustellen, die die Nachteile im Stand der Technik überwindet und insbesondere ermöglicht, die Anreicherung einer Gaskomponente aus einem Gasgemisch zu verbessern und die Nutzung einer Druckdifferenz zur Erzeugung mechanischer Leistung weiter zu fördern.

Ferner sollen Verfahren zur Gasanreicherung und zur Erzeugung mechanischer Leistung bereitgestellt werden, die die erfindungsgemäße Vorrichtung einsetzen.

Die erste Aufgabe wird gelöst durch den Gegenstand des Anspruchs 1.

Dabei ist vorgesehen, dass der erste Behälter und/oder der zweite Behälter mit Gas gefüllt ist bzw. sind.

Außerdem kann vorgesehen sein, dass die Vorrichtung zumindest eine Gaszuführung zum Zuführen eines Gases und zumindest eine Gasabführung zum Abführen eines Gases umfasst.

Bevorzugt ist ebenfalls, dass die zumindest eine Gaszuführung mit dem ersten und/oder zweiten Behälter verbunden ist, und/oder die zumindest eine Gasabführung mit dem ersten und/oder zweiten Behälter verbunden ist.

Es ist bevorzugt vorgesehen, dass der zweite Behälter mit einer Vorrichtung zur Erzeugung mechanischer Leistung verbunden ist oder die Vorrichtung zur Erzeugung mechanischer Leistung im zweiten Behälter integriert ist.

Ferner ist bevorzugt vorgesehen, dass der zweite Behälter mit einer Vorrichtung zur Erzeugung mechanischer Leistung verbunden ist oder die Vorrichtung zur Erzeugung mechanischer Leistung im zweiten Behälter integriert ist.

Besonders bevorzugt ist, dass der zweite Behälter zur Umgebungsatmosphäre hin offen ist.

Es ist weiter vorteilhaft vorgesehen, dass die Länge jeder der einen oder mehreren Kapillaren von 10 µm bis 3 cm beträgt.

Gemäß einer besonderen Ausführungsform der Erfindung ist vorgesehen, dass der Öffnungsdurchmesser jeder der einen oder mehreren Kapillaren auf der Seite des ersten Behälters 0,05-5 µm beträgt und der Öffnungsdurchmesser jeder der einen oder mehreren Kapillaren am zweiten Behälter 0,5 bis 100 µm beträgt.

Vorteilhafterweise ist der Winkel α im verjüngten Abschnitt jeder der einen oder mehreren Kapillaren zwischen einer Kapillarenwand und der Winkelhalbierenden <45°, liegt vorzugsweise zwischen 0,001 bis 10°.

Besonders bevorzugt ist das Mittel zur Erzeugung einer Temperaturdifferenz eine Heizvorrichtung am oder innerhalb des ersten Behälters.

Auch kann vorgesehen sein, dass das Mittel zur Erzeugung einer Temperaturdifferenz eine Kühlvorrichtung am oder innerhalb des zweiten Behälters umfasst.

Ebenfalls ist bevorzugt, dass der erste Behälter und der zweite Behälter thermisch voneinander getrennt sind.

Weiterhin kann sich das Material des ersten Behälters vom Material des zweiten Behälters unterscheiden.

Gemäß einer bevorzugten Ausführungsform liegt die Knudsen-Zahl (Kn) der Kapillareinrichtung zwischen 1 > Kn > 0,005, bevorzugt 1 > Kn > 0,01, wobei für die Ermittlung der Knudsen-Zahl der Durchmesser der Pore am verjüngten Ende verwendet wird.

Besonders bevorzugt ist vorgesehen, dass die Temperaturdifferenz im Mittel 0,1°C bis 800°C, bevorzugt 0,5-100°C beträgt.

Eine weitere Ausführungsform der Erfindung liefert ein Verfahren zur Gasanreicherung eines vorbestimmten Gases aus einem Gasgemisch, welches die folgenden Schritte umfasst:
- Einführen eines ein vorbestimmtes Gas enthaltenden Gasgemisches in den ersten Behälter
- Einstellen einer Temperaturdifferenz T_{1.Behälter} > T_{2.Behälter} zwischen dem ersten Behälter und dem zweiten Behälter mit dem Mittel zur Erzeugung und/oder Aufrechterhaltung einer Temperaturdifferenz und
- Abführen des vorbestimmten Gases oder eines Gasgemisches, in dem das vorbestimmte Gas angereichert ist, aus dem zweiten Behälter.

Dabei ist bevorzugt, dass mehrere Vorrichtungen in Reihe geschaltet sind.

Außerdem ist bevorzugt, dass das aus dem zweiten Behälter vorbestimmte Gas zumindest teilweise in den ersten Behälter zurückgeführt wird.

Schließlich liefert die vorliegende Erfindung ein Verfahren zur Erzeugung mechanischer Leistung mittels einer Vorrichtung, welches die Schritte umfasst:
- Einführen eines Gases in den ersten Behälter,
- Einstellen einer Temperaturdifferenz T_{1.Behälter} > T_{2.Behälter} zwischen dem ersten Behälter und dem zweiten Behälter mit dem Mittel zur Erzeugung und/oder Aufrechterhaltung einer Temperturdifferenz und
- Führen des Gases aus dem zweiten Behälter in bzw. durch eine Vorrichtung zur Erzeugung mechanischer Leistung.

Überraschenderweise wurde erfindungsgemäß gefunden, dass es für die aus der DE 10 2005 055 675 B3 bekannte Vorrichtung wesentlich ist, eine Temperaturdifferenz zwischen dem ersten und zweiten Behälter vorzusehen, so dass die Temperatur im ersten Behälter größer ist als die Temperatur im zweiten Behälter. Dabei ist ein nur geringe Temperaturdifferenz notwendig, damit der Druck, nicht wie zu erwarten gewesen wäre im ersten Behälter, sondern im zweiten Behälter steigt. Dieser Effekt (d.h. Erhöhung der Temperatur des ersten Behälters gegenüber dem zweiten Behälter und daraus resultierender Druckanstieg im zweiten Behälter), war in keiner Weise zu erwarten gewesen, resultiert jedoch darin, dass die erfindungsgemäße Vorrichtung deutlich besser in einem Verfahren zur Gasanreicherung oder zur Erzeugung mechanischer Leistung eingesetzt werden kann.

Ferner wurde erfindungsgemäß als bevorzugt festgestellt, wenn die gasspezifische Wechselwirkung der Moleküle mit der Wand eine große Bedeutung aufweist. Der Wandeffekt ist gegenüber einer Wechselwirkung der Gasmoleküle untereinander umso ausgeprägter, je höher die Knudsen-Zahl ist, d.h. das Verhältnis von mittlerer freier Weglänge der Gasmoleküle zum Porendurchmesser. Besonders bevorzugt ist die Knudsen-Zahl (Kn) zwischen 1 > Kn > 0,005. Dies steht im Gegensatz zur Erkenntnis der DE 10 2005 055 675 B3, wonach stets eine Knudsen-Zahl von >1 vorzusehen ist, so dass der minimale Querschnitt von jeder der einen oder mehreren Kapillaren mindestens in einer Richtung kleiner ist als die vorbestimmte mittlere freie Weglänge. Auch wurde erfindungsgemäß festgestellt, dass die aus dem Stand der Technik bekannte Vorrichtung nicht der dort beschriebenen Gleichung "Einfallswinkel=Ausfallswinkel" folgt, die Reflexion an den Wänden also nicht gemäß der Newton'schen Mechanik beschreibbar ist, sondern auf dem Knudsenschen Cosinusgesetz beruht.

Während die aus dem Stand der Technik bekannte Vorrichtung als besonders geeignet für einmolekulare Gase beschrieben wird, wurde im Gegensatz dazu erfindungsgemäß festgestellt, dass bei Verwendung der beschriebenen Vorrichtung zur Gasanreicherung besonders gute Ergebnisse zur Abtrennung von Kohlendioxid (CO₂) erhalten werden.

Eine Optimierung der Gasanreicherung kann durch gezielte Materialauswahl der Kapillareinrichtung erreicht werden.

Bevorzugt ist der Porendurchmesser um einen Faktor 10 bis 100 größer als die mittlere freie Weglänge, so dass diese nur eine untergeordnete Rolle bei Einsatz der erfindungsgemäßen Vorrichtung in den vorgeschlagenen Verfahren spielt.

Erfindungsgemäß wurde festgestellt, dass gasspezifische Wechselwirkungen mit der Porenwand einen erheblichen Einfluss auf das Verhalten der Gase in der Kapillareinrichtung aufweisen, wobei eine Temperaturdifferenz als Triebkraft für die erfindungsgemäßen Verfahren identifiziert werden konnte.

Nachfolgend werden bevorzugte Ausführungsbeispiele der vorliegenden Erfindung anhand der beiliegenden Figuren näher erläutert, dabei zeigt:
- Figur 1: einen Graphen, der die Abhängigkeit der Druckdifferenz Δp von der Temperaturdifferenz ΔT bei Betrieb einer erfindungsgemäßen Vorrichtung zeigt,
- Figur 2: eine schematische Darstellung einer erfindungsgemäßen Vorrichtung, die zur Gasanreicherung eingesetzt werden kann, und
- Figur 3: eine schematische Darstellung einer weiteren erfindungsgemäßen Vorrichtung, die zur Erzeugung mechanischer Leistung eingesetzt werden kann.

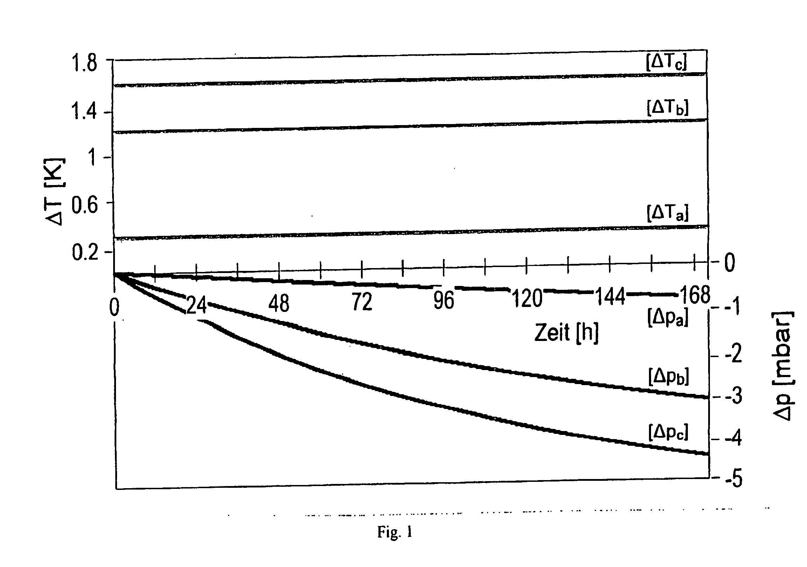

Für eine erfindungsgemäße Vorrichtung wurde bei deren Betrieb mit einem Gas die Abhängigkeit zwischen der eingestellten Temperaturdifferenz und der daraus resultierenden Druckdifferenz zwischen dem ersten Behälter und dem zweiten Behälter ermittelt. Die Ergebnisse sind in Figur 1 gezeigt, wobei im oberen Teil von Figur 1 die angelegte mittlere Temperaturdifferenz ΔT mit T_{1.Behälter} > T_{2.Behälter} gezeigt ist. Im unteren Teil von Figur 1 ist die aus dieser Temperaturdifferenz resultierende Druckdifferenz Δp mit p_{1.Behälter} < p_{2.Behälter} gezeigt. Figur 1 ist zu entnehmen, dass bereits für sehr kleine Temperaturdifferenzen signifikante Druckunterschiede resultieren, die genutzt werden können.

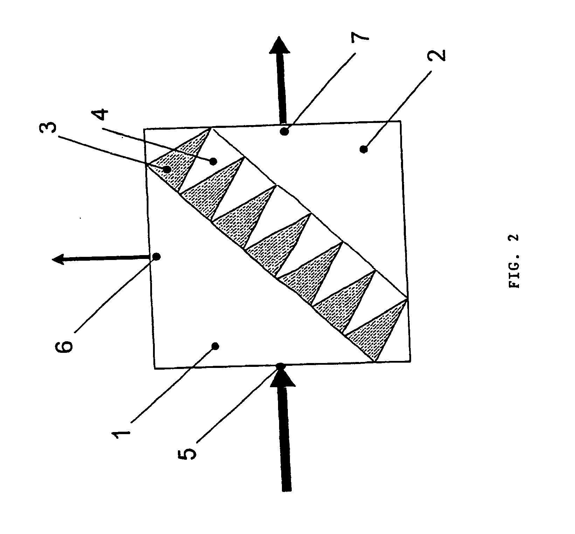

Figur 2 zeigt schematisch eine erfindungsgemäße Vorrichtung zur Gasanreicherung, die, vereinfacht dargestellt, aus einem ersten Behälter 1 und einem zweiten Behälter 2 aufgebaut ist, die über eine Kapillareinrichtung 3 miteinander verbunden sind. Die Kapillareinrichtung 3 weist eine Mehrzahl von Kapillaren 4 auf, die sich vom zweiten Behälter 2 in Richtung auf den ersten Behälter 1 verjüngen. Selbstverständlich ist es möglich, dass sich die Kapillaren 4 innerhalb der Kapillareinrichtung 3 abschnittsweise verjüngen. Entsprechende Kapillarformen sind beispielsweise aus der DE 10 2005 055 675 B2 bekannt. Die in Figur 2 gezeigte Vorrichtung umfasst ferner ein (nicht gezeigtes) Mittel zur Erzeugung und/oder Aufrechterhaltung einer Temperaturdifferenz T_{1.Behälter} > T_{2.Behälter} zwischen dem ersten

Behälter 1 und dem zweiten Behälter 2. Mit diesem Mittel wird erreicht, dass die Temperatur im ersten Behälter 1 im Mittel stabil höher als die Temperatur im zweiten Behälter 2 ist. In den ersten Behälter 1 führt eine Gaszuführung 5, über die ein Gasgemisch in den ersten Behälter 1 geleitet werden kann. Aus dem ersten Behälter 1 führt eine Gasabführung 6, über die ein abgereichertes Gasgemisch aus dem ersten Behälter entfernt werden kann. Schließlich weist der zweite Behälter 2 eine Gasabführung 7 auf, über die angereichertes Gas bzw. Konzentrat entfernt werden kann.

Bei Betrieb der in Figur 2 dargestellten Vorrichtung wird, vorzugsweise kontinuierlich, ein Gasgemisch über die Gaszuführung 5 in den ersten Behälter 1 eingeführt. Über das nicht gezeigte Mittel zur Erzeugung und/oder Aufrechterhaltung einer Temperaturdifferenz wird die Temperatur im ersten Behälter gegenüber der Temperatur im zweiten Behälter 2 erhöht bzw. erhöht gehalten, was in einem Druckanstieg im zweiten Behälter 2 resultiert. Während des Verfahrens kann ein abgereichertes Gasgemisch über die Gasabführung 6 aus dem ersten Behälter 1 entfernt werden. Ferner kann angereichertes Gas bzw. Konzentrat aus dem zweiten Behälter 2 über die Gasabführung 7 abgenommen werden. Dieses angereicherte Gas kann beispielsweise wieder in den ersten Behälter 1 derselben Vorrichtung zirkuliert werden oder in eine weitere, in Serie geschaltete, Vorrichtung zur Gasanreicherung eingeführt werden, um die Gasanreicherung noch weiter voranzutreiben. Es ist offensichtlich, dass eine Vielzahl von Vorrichtungen zur Gasanreicherung hintereinander geschaltet werden können.

Das anzureichernde Gas weist aufgrund der Vorrichtungsmerkmale in Verbindung mit dem Mittel zur Erzeugung und/oder Aufrechterhaltung der Temperaturdifferenz eine höhere Durchgangsrate bezüglich der Kapillareinrichtung 3 als andere Bestandteile des zu trennenden Gasgemisches auf. Wie oben bereits ausgeführt, dient insbesondere die Temperaturdifferenz als Triebkraft, damit in der erfindungsgemäßen Vorrichtung eine Gasanreicherung durchgeführt werden kann.

Das Mittel zur Erzeugung und/oder Aufrechterhaltung einer Temperaturdifferenz kann beispielsweise eine Heizeinrichtung sein, die innerhalb des ersten Behälters 1 angeordnet ist. Als ein solches Mittel kommt jedoch beispielsweise auch in Betracht, den zweiten Behälter 2 durch eine nicht gezeigte Kühlvorrichtung zu kühlen. Auch können Heizvorrichtung und Kühlvorrichtung gemeinsam verwendet werden. Schließlich kann auch vorgesehen sein, dass der zweite Behälter 2 gegenüber der Umgebungsatmosphäre isoliert ist. Dann reichen für die erfindungsgemäßen Verfahren bereits Schwankungen der Umgebungstemperatur aus, um den oben beschriebenen Effekt des Druckanstiegs im zweiten Behälter 2 aufgrund einer Temperaturdifferenz zwischen den ersten und zweiten Behältern 1, 2 zu bewirken.

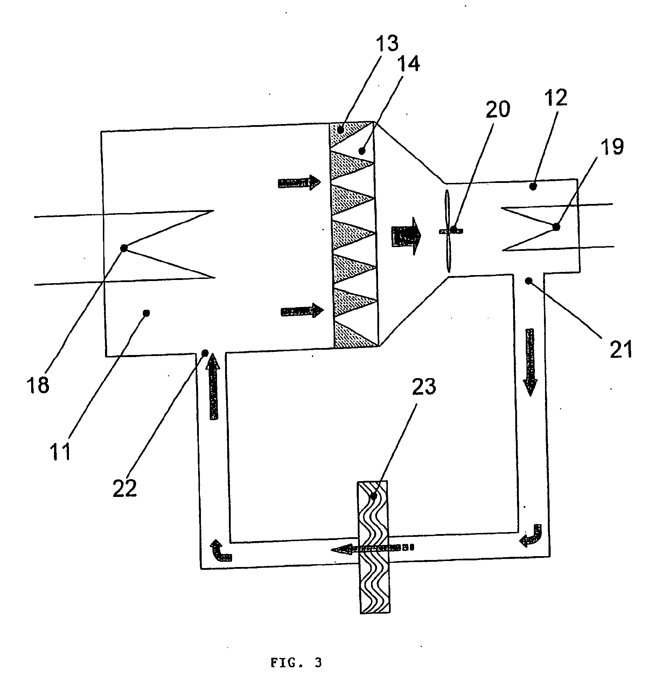

Es ist offensichtlich, dass Figur 2 (und ebenfalls die im folgenden zu beschreibende Figur 3) lediglich schematische und nicht-maßstäbliche Darstellungen sind. Insbesondere sind die Kapillaren 4 und deren laterale Abmessungen unmaßstäblich dargestellt.

Figur 3 veranschaulicht schließlich eine weitere erfindungsgemäße Vorrichtung, die zur Erzeugung mechanischer Leistung eingesetzt werden kann.

Ein erster Behälter 11 ist dabei mit einem zweiten Behälter 12 über eine Kapillareinrichtung 13 verbunden. Die Kapillareinrichtung 13 weist eine Mehrzahl von Kapillaren 14 auf, die sich vom zweiten Behälter 12 in Richtung auf den ersten Behälter 11 verjüngen. Am ersten Behälter 11 ist ein Mittel 18 zur Erzeugung und/oder Aufrechterhaltung einer Temperaturdifferenz angeordnet, vorzugsweise eine Heizvorrichtung. Am zweiten Behälter 12 ist ein weiteres Mittel 19 zur Erzeugung und/oder Aufrechterhaltung einer Temperaturdifferenz angeordnet, vorzugsweise eine Kühlvorrichtung. Im zweiten Behälter 12 ist ferner ein Mittel 20 zur Erzeugung mechanischer Leistung, beispielsweise ein Rotor oder eine Turbine, im Strömungsweg des Gases angeordnet. Der erste Behälter 11 und der zweite Behälter 12 sind ferner über eine Verbindungsleitung umfassend einen Auslass 21 aus dem zweiten Behälter 12 und einem Einlass 22 in den ersten Behälter 11 miteinander verbunden. In dieser Verbindungsleitung ist ferner ein Mittel 23 zur thermischen Trennung des ersten Behälters 11 und des zweiten Behälters 12 vorgesehen.

Bei Betrieb der in Figur 3 gezeigten Vorrichtung wird eine Temperaturdifferenz T_{1. Behälter} > T_{2. Behälter} zwischen dem ersten Behälter 11 und dem zweiten Behälter 12 eingestellt und aufrechterhalten. Die Temperaturdifferenz kann durch Erwärmen eines Gases im ersten Behälter 11 und/oder Abkühlen des Gases im zweiten Behälter 12 erfolgen. Durch diese Temperaturdifferenz wird bewirkt, dass Gas aus dem ersten Behälter 11 in den zweiten Behälter 12 strömt, was zu einem Druckanstieg im zweiten Behälter 12 führt. Die Strömung des Gases kann genutzt werden, um den im Strömungsweg des Gases im zweiten Behälter 12 angeordneten Rotor 20 anzutreiben und dadurch mechanische Leistung zu erzeugen. Das Gas aus dem zweiten Behälter 12 kann dann über den Auslass 21 und den Einlass 22 in den ersten Behälter 11 zurückgeführt werden. Dabei ist es wesentlich, dass der erste Behälter 11 und der zweite Behälter 12 voneinander thermisch getrennt sind.

## Patentansprüche

1. Vorrichtung zur Gasanreicherung oder Erzeugung mechanischer Leistung, welche umfasst:
- einen ersten Behälter (1; 11) und einen zweiten Behälter (2; 12),
- eine zwischen dem ersten Behälter (1; 11) und dem zweiten Behälter (2; 12) angeordnete Kapillareinrichtung (3; 13) mit einer oder mehreren Kapillaren (4; 14), wobei jede der einen oder mehreren Kapillaren (4; 14) den ersten Behälter (1; 11) mit dem zweiten Behälter (2; 12) verbindet, und wobei jede der einen oder mehreren Kapillaren (4; 14) sich vom zweiten Behälter (2; 12) in Richtung auf den ersten Behälter (1; 11) zumindest abschnittsweise verjüngt,
**gekennzeichnet durch**
- Mittel (18) zur Erzeugung und/oder Aufrechterhaltung einer Temperaturdifferenz T_{1.Behälter} > T_{2.Behalter} zwischen dem ersten Behälter (1; 11) und dem zweiten Behälter (2; 12).

2. Vorrichtung nach Anspruch 1, **dadurch gekennzeichnet, dass** der erste Behälter (1; 11) und/oder der zweite Behälter (2; 12) mit Gas gefüllt ist bzw. sind.

3. Vorrichtung nach Anspruch 1 oder 2, ferner umfassend zumindest eine Gaszuführung (5) zum Zuführen eines Gases und zumindest eine Gasabführung (6, 7) zum Abführen eines Gases.

4. Vorrichtung nach einem der vorangehenden Ansprüche, **dadurch gekennzeichnet, dass** der zweite Behälter (2; 12) mit einer Vorrichtung zur Erzeugung mechanischer Leistung (20) verbunden ist oder die Vorrichtung zur Erzeugung mechanischer Leistung (20) im zweiten Behälter (2; 12) integriert ist.

5. Vorrichtung nach einem der vorangehenden Ansprüche, **dadurch gekennzeichnet, dass** der Öffnungsdurchmesser jeder der einen oder mehreren Kapillaren (4; 14) auf der Seite des ersten Behälters (1; 11) 0,05-5 µm beträgt und der Öffnungsdurchmesser jeder der einen oder mehreren Kapillaren (4; 14) am zweiten Behälter (2; 12) 0,5 bis 100 µm beträgt.

6. Vorrichtung nach einem der vorangehenden Ansprüche, **dadurch gekennzeichnet, dass** der Winkel α im verjüngten Abschnitt jeder der einen oder mehreren Kapillaren (4; 14) zwischen einer Kapillarenwand und der Winkelhalbierenden <45° ist, vorzugsweise zwischen 0,001 bis 10° liegt.

7. Vorrichtung nach einem der vorangehenden Ansprüche, **dadurch gekennzeichnet, dass** das Mittel zur Erzeugung einer Temperaturdifferenz eine Heizvorrichtung am oder innerhalb des ersten Behälters (1; 11) umfasst.

8. Vorrichtung nach einem der vorangehenden Ansprüche, **dadurch gekennzeichnet, dass** das Mittel zur Erzeugung einer Temperaturdifferenz eine Kühlvorrichtung am oder innerhalb des zweiten Behälters (2; 12) umfasst.

9. Vorrichtung nach einem der vorangehenden Ansprüche, **dadurch gekennzeichnet, dass** der erste Behälter (1; 11) und der zweite Behälter (2; 12) thermisch voneinander getrennt sind.

10. Vorrichtung nach einem der vorangehenden Ansprüche, **dadurch gekennzeichnet, dass** die Knudsen-Zahl (Kn) der Kapillareinrichtung (3; 13) zwischen 1 > Kn > 0,005, bevorzugt 1 > Kn > 0,01, liegt.

11. Vorrichtung nach einem der vorangehenden Ansprüche, **dadurch gekennzeichnet, dass** die Temperaturdifferenz im Mittel 0,1°C bis 800°C, bevorzugt 0,5-100°C beträgt.

12. Verfahren zur Gasanreicherung eines vorbestimmten Gases aus einem Gasgemisch mittels einer Vorrichtung nach einem der Ansprüche 1 bis 11, welches die folgenden Schritte umfasst:
- Einführen eines ein vorbestimmtes Gas enthaltenden Gasgemisches in den ersten Behälter (1; 11)
- Einstellen einer Temperaturdifferenz T_{1.Behälter} > T_{2.Behälter} zwischen dem ersten Behälter (1; 11) und dem zweiten Behälter (2; 12) mit dem Mittel zur Erzeugung und/oder Aufrechterhaltung einer Temperaturdifferenz (18) und
- Abführen des vorbestimmten Gases oder eines Gasgemisches, in dem das vorbestimmte Gas angereichert ist, aus dem zweiten Behälter (2; 12).

13. Verfahren nach Anspruch 12, **dadurch gekennzeichnet, dass** mehrere Vorrichtungen nach einem der Ansprüche 1 bis 11 in Reihe geschaltet sind.

14. Verfahren nach einem der Ansprüche 12 oder 13, **dadurch gekennzeichnet, dass** das aus dem zweiten Behälter (2; 12) vorbestimmte Gas zumindest teilweise in den ersten Behälter (1; 11) zurückgeführt wird.

15. Verfahren zur Erzeugung mechanischer Leistung mittels einer Vorrichtung nach einem der Ansprüche 1 bis 11, welches die Schritte umfasst:
- Einführen eines Gases in den ersten Behälter (1; 11),
- Einstellen einer Temperaturdifferenz T_{1.Behälter} > T_{2.Behälter} zwischen dem ersten Behälter (1; 11) und dem zweiten Behälter (2; 12) mit dem Mittel zur Erzeugung und/oder Aufrechterhaltung einer Temperturdifferenz (18) und
- Führen des Gases aus dem zweiten Behälter (2; 12) in bzw. durch eine Vorrichtung zur Erzeugung mechanischer Leistung (20).

## Claims

1. Device for enriching gas or generating mechanical performance, which comprises:
- a former container (1; 11) and a latter container (2; 12),
- a capillary (3; 13) with one or more capillaries (4; 14), arranged between the former container (1; 11) and the latter container (2; 12), wherein each of the one or more capillaries (4; 14) connects the former container (1; 11) with the latter container (2; 12), and wherein each of the one or more capillaries (4; 14) at least sectionally tapers from the latter container (2; 12) in the direction towards the former container (1; 11), **characterised by**
- means (18) for generating and/or maintaining a temperature gradient T_{1st container} > T_{2nd} container between the former container (1; 11) and the latter container (2; 12).

2. Device according to claim 1, **characterised in that** the former container (1; 11) and/or the latter container (2; 12) is or are filled with gas.

3. Device according to claim 1 or 2, further comprising at least one gas supply (5) for supplying a gas and at least one gas discharge (6, 7) for discharging a gas.

4. Device according to one of the preceding claims, **characterised in that** the latter container (2; 12) is connected with a device for generating mechanical performance (20) or the device for generating mechanical performance (20) is integrated in the latter container (2; 12).

5. Device according to one of the preceding claims, **characterised in that** the opening diameter of each of the one or more capillaries (4; 14) on the side of the former container (1; 11) is 0.05-5µm and the opening diameter of each of the one or more capillaries (4; 14) at the latter container (2; 12) is 0.5 to 100µm.

6. Device according to one of the preceding claims, **characterised in that** the angle a in the tapered section of each of the one or more capillaries (4; 14) between a capillary wall and the bisector is <45°, preferably lying between 0.001 to 10°.

7. Device according to one of the preceding claims, **characterised in that** the means for generating a temperature gradient comprises a heating device at the or within the former container (1; 11).

8. Device according to one of the preceding claims, **characterised in that** the means for generating a temperature gradient comprises a cooling device at the or within the latter container (2; 12).

9. Device according to one of the preceding claims, **characterised in that** the former container (1; 11) and the latter container (2; 12) are thermally separated from each other.

10. Device according to one of the preceding claims, **characterised in that** the Knudsen number (Kn) of the capillary (3; 13) is between 1 > Kn > 0.005, preferably 1 > Kn > 0.01.

11. Device according to one of the preceding claims, **characterised in that** the temperature gradient on average is 0.1 °C to 800°C, preferably 0.5-100°C.

12. Method for gas enrichment of a predetermined gas from a gas mixture by means of a device according to one of the claims 1 to 11, which comprises the following steps:
- introducing a gas mixture containing a predetermined gas into the former container (1; 11)
- adjusting a temperature gradient T₁ₛₜ container > T_{2nd container} between the former container (1; 11) and the latter container (2; 12) with the means for generating and/or maintaining a temperature gradient (18) and
- discharging the predetermined gas or a gas mixture, in which the predetermined gas is enriched, from the latter container (2; 12).

13. Method according to claim 12, **characterised in that** a number of devices according to one of the claims 1 to 11 are connected in series.

14. Method according to one of the claims 12 or 13, **characterised in that** the predetermined gas from the latter container (2; 12) is at least partially returned into the former container (1; 11).

15. Method for generating mechanical performance by means of a device according to one of the claims 1 to 11, which comprises the following steps:
- introducing a gas into the former container (1; 11),
- adjusting a temperature gradient T₁ₛₜ container > T_{2nd container} between the former container (1; 11) and the latter container (2; 12) with the means for generating and/or maintaining a temperature gradient (18) and
- guiding the gas from the latter container (2; 12) in or through a device for generating mechanical performance (20).

## Revendications

1. Dispositif d'enrichissement de gaz ou de génération d'une puissance mécanique qui comprend :
- un premier réservoir (1 ; 11) et un second réservoir (2 ; 12),
- un système capillaire (3 ; 13) disposé entre le premier réservoir (1 ; 11) et le second réservoir (2 ; 12) comportant un ou plusieurs capillaires (4 ; 14), chaque capillaire ou chacun parmi plusieurs capillaires (4 ; 14) reliant le premier réservoir (1 ; 11) avec le second réservoir (2 ; 12) et chaque capillaire ou chacun parmi plusieurs capillaires (4 ; 14) s'amenuisant au moins sur des portions à partir du second réservoir (2 ; 12) en direction du premier réservoir (1 ; 11)
**caractérisé par**
- des moyens (18) pour la génération et/ou le maintien d'une différence de températures T_{réservoir1} > T_{réservoir2} entre le premier réservoir (1 ; 11) et le second réservoir (2 ; 12).

2. Dispositif selon la revendication 1 **caractérisé en ce que** le premier réservoir (1 ; 11) et/ou le second réservoir (2 ; 12) sont respectivement remplis de gaz.

3. Dispositif selon les revendications 1 ou 2 comprenant en outre une amenée de gaz (5) pour l'alimentation d'un gaz et au moins une sortie de gaz (6, 7) pour l'évacuation d'un gaz.

4. Dispositif selon l'une des revendications précédentes **caractérisé en ce que** le second réservoir (2 ; 12) est relié avec un dispositif de génération de puissance mécanique (20) ou que le dispositif de génération de puissance mécanique (20) est intégré dans le second réservoir (2 ; 12).

5. Dispositif selon l'une des revendications précédentes **caractérisé en ce que** le diamètre de l'ouverture de chaque capillaire ou de chacun parmi plusieurs capillaires (4 ; 14) s'élève à 0,05-5 µm du côté du premier réservoir (1 ; 11) et que le diamètre de l'ouverture de chaque capillaire ou de chacun parmi plusieurs capillaires (4 ; 14) est de 0,5 jusqu'à 100 µm au niveau du second réservoir (2 ; 12).

6. Dispositif selon l'une des revendications précédentes **caractérisé en ce que** l'angle α dans la portion amenuisée de chaque capillaire ou de chacun parmi plusieurs capillaires (4 ; 14) entre une paroi de capillaire et la bissectrice de l'angle est < 45 °, de préférence compris entre 0,001 et 10 °.

7. Dispositif selon l'une des revendications précédentes **caractérisé en ce que** le moyen de génération d'une différence de température comprend un dispositif de chauffage sur, ou dans, le premier réservoir (1 ; 11).

8. Dispositif selon l'une des revendications précédentes **caractérisé en ce que** le moyen de génération d'une différence de température comprend un dispositif de refroidissement sur, ou dans, le second réservoir (2 ; 12).

9. Dispositif selon l'une des revendications précédentes **caractérisé en ce que** le premier réservoir (1 ; 11) et le second réservoir (2 ; 12) sont séparés thermiquement l'un de l'autre.

10. Dispositif selon l'une des revendications précédentes **caractérisé en ce que** le nombre de Knudsen (Kn) du système de capillaires (3 ; 13) est situé entre 1 > Kn > 0,005, de préférence entre 1 > Kn > 0,01.

11. Dispositif selon l'une des revendications précédentes **caractérisé en ce que** la différence de température dans le moyen s'élève de 0,1°C jusqu'à 800 °C, de préférence de 0,5 - 100 °C.

12. Procédé d'enrichissement en gaz d'un gaz prédéterminé dans un mélange de gaz au moyen d'un dispositif selon les revendications de 1 à 11 qui comprend les étapes suivantes :
- alimentation d'un mélange de gaz contentant un gaz prédéterminé dans le premier réservoir (1 ; 11)
- réglage d'une différence de température T_{réservoir1} > T_{réservoir2} entre le premier réservoir (1 ; 11) et le second réservoir (2 ; 12) avec le moyen de génération et/ou de maintien d'une différence de température (18) et
- évacuation du gaz prédéterminé, ou d'un mélange de gaz dans lequel le gaz prédéterminé est enrichi, à partir du second réservoir (2 ; 12).

13. Procédé selon la revendication 12 **caractérisé en ce que** plusieurs dispositifs selon l'une des revendications de 1 à 11 sont mis en marche en série.

14. Procédé selon l'une des revendications 12 ou 13 **caractérisé en ce que** le gaz prédéterminé du second réservoir (2 ; 12) est reconduit au moins partiellement dans le premier réservoir (1 ; 11).

15. Procédé de génération d'une puissance mécanique au moyen d'un dispositif selon l'une des revendications de 1 à 11 qui comprend les étapes suivantes :
- introduction d'un gaz dans le premier réservoir (1 ; 11),
- réglage d'une différence de température T_{réservoir1} > T_{réservoir2} entre le premier réservoir (1 ; 11) et le second réservoir (2 ; 12) avec le moyen de génération et/ou de maintien d'une différence de température (18) et
- conduite du gaz à partir du second réservoir (2 ; 12) dans, respectivement par, un dispositif de génération d'une puissance mécanique (20).
